# EUROPEAN PATENT SPECIFICATION

(11) **EP 0 498 123 B1**
(45) Date of publication and mention of the grant of the patent: **01.10.1997**
(21) Application number: 91311990.5
(22) Date of filing: 23.12.1991
(51) Int. Cl.: B65D 23/10

(54) **Bottle with handle**
Flasche mit Griff
Bouteille avec poignée

(30) Priority: 29.12.1990 JP 417079/90; 29.12.1990 JP 406068/90 U; 30.08.1991 JP 77101/91 U; 15.10.1991 GB 9121861
(43) Date of publication of application: 12.08.1992
(60) Divisional application: 97104157.9
(73) Proprietor: A.K. TECHNICAL LABORATORY, INC.,, Hanishina-gun, Nagano-ken (JP)
(72) Inventor: Takeuchi, Setsuyuki, Hanishina-gun, Nagano-ken (JP)
(74) Representative: Meddle, Alan Leonard

(56) References cited:
- EP-A- 0 480 836
- GB-A- 2 174 669
- US-A- 4 368 826
- US-A- 4 832 216

## Description

### BACKGROUND OF THE INVENTION

### (1) Field of the Invention

This invention relates to a bottle with an ear made of synthetic resin prepared by injection orientation blow molding.

### (2) Prior Art

In a bottle molded by injection molding a preform, and orientation blow molding portions other than a mouth portion of the preform into a thin wall-thickness configuration while holding said mouth portion, it is technically difficult to mold a part of the preform into an ear during orientation blow molding, unlike normal blow molding. Therefore, in case of mounting an ear, the ear is molded below the mouth portion integral with the preform.

Molding of such a bottle can be achieved by a cold parison system which molds a preform using a normal injection mold to mold the preform into a bottle by an orientation blow molding machine, but has been difficult to be employed in case of a hot parison system in which an operation from injection molding of a preform to orientation blow molding is carried out by a single apparatus.

In view of the foregoing, an attempt has been made to mount an ear after a bottle has been molded. In this case, however, a position at which an ear is mounted is limited to a portion above a support ring.

Therefore, the mouth portion of the bottle with an ear is formed to be longer than that of a normal bottle and a position at which an ear is mounted is high. Therefore, particularly in a large bottle, it is difficult to incline the bottle while holding the ear, often wanting in smooth pouring of contents.

Such a problem as just mentioned can be solved by an arrangement wherein a lower side of a mouth is formed to have a large diameter, and threads are provided in the outer periphery of the large diameter portion, to which the ear is threadedly mounted, as disclosed in British Registered Design No. 1,039,436. However, in the injection orientation blow molding, it is impossible to orientation blow mold portions up to the large diameter portion without impairing the dimension of the thread formed in the outer peripheral side.

In the injection orientation blow molding, the thread of the mouth portion, the support ring and the like remain injection molded with a view to maintaining molding accuracy, and making the wall portion thin by the orientation blow molding is carried out from the underside of the support ring. For this reason, in the case where a large diameter portion having threads is formed below the support ring to threadedly mount an ear thereon, portions up to the large diameter portion need to leave therein a thick-wall portion resulted from injection molding. As a result, the use of material per bottle increases, thus increasing cost.

The orientation blow molding has the merit in that since portions other than the mouth portion can be molded to have a thin wall-thickness, there can be obtained a bottle which is lighter than that obtained by the normal blow molding and is excellent in falling strength, because of which an increase of non-oriented portions left to be thin in wall-thickness is not unpreferable, and accordingly, a position of a large diameter portion at which an ear is mounted is limited to a portion near the mouth portion.

Moreover, mounting of an ear by means of a screw causes the ear to be easily loosened due to vibrations or the like, and a lower end of the ear is not connected to the body of a bottle and in a state in which the ear is easily disengaged. When the bottle is inclined to pour the content, the load is concentrated on a bended portion at the upper portion of the ear to generate a flexture thereat. In case of an ear made of synthetic resin, a gripping portion thereof is opened.

US-A-4,368,826 (Thompson) discloses a bottle (10) formed by biaxial orientation blow-moulding. The bottle (10) has a mounting groove or neck ring (16) and a handle (12) which comprises a bore (32) mountable on the neck ring (16). In one example of the bottle (10), co-operating interlocking lugs (47) and (48) are arranged about the neck ring (16) and bore (32), respectively, so that when the bore (32) is placed over the neck ring (16) and rotated, the lugs (48) pass between and under lugs (47) to secure the handle to the bottle (10). The preamble of claim 1 is based on this prior art.

US-A-4,832,216 (Reyes) discloses a bottle (2) produced by standard injection-moulding techniques. The bottle (2) has an integral shoulder ring (13) which extends circumferentially about the bottle neck (4) to serve as a detent for securely fixing a handle (1) to the bottle (2). The handle (1) comprises a generally cylindrical neck engaging portion (15) which is passed over the neck region (4) of the bottle (2) and forced downwardly over the shoulder ring (13) into permanent engagement with the bottle neck (4).

### SUMMARY OF THE INVENTION

According to the present invention, there is provided a bottle with an ear comprising a mounting ring, the bottle comprising a mouth portion, a body prepared by orientation blow-moulding and disposed below the mouth portion, a mounting portion comprising a mounting groove, an upper portion of the mounting groove being formed with an edge having one of a notch or a projecting surface, the mounting ring having an inner side internally provided with the other of a notch or a projecting surface corresponding to the projecting surface or notch, respectively, of the mounting groove for securely connecting the ear to the bottle, characterised in that the mounting portion is formed on the body and has a diameter greater than that of the mouth portion and in that the upper portion of the mounting groove is prepared by injection-moulding and an inner wall of the mounting groove is prepared by orientation blow-moulding.

Preferably, the upper portion of the mounting groove comprises a flange, below the mouth portion, and the edge of the mounting groove is formed by a lower end edge of the flange.

Preferably, after the ear has been mounted on the bottle, a lower end of the ear is attached to a side of the body by a heat-shrinkable band fitted around the body of the bottle.

According to another aspect of the present invention, there is provided a method of forming the above-mentioned bottle comprising a mounting portion having a mounting groove, which method comprises injection-moulding, to form a preform and a flange around the outer surface of the preform, and orientation blow-moulding, to extend a wall portion of the preform so as to come into close contact with the flange, to form part of the mounting groove. Alternatively, this method comprises injection moulding, to form a preform and a flange around the outer surface of the preform, and orientation blow-moulding, to extend a wall portion of the preform so as to come into close contact with the flange, to form part of the mounting groove, wherein one end of the flange is kept free to form an edge around an outer surface of the bottle wall.

The ear is mounted on a molded bottle later but a mounting portion of the ear is molded to have a thin wall-thickness and mounted below a support ring whereby a position of the ear mounting portion can be set downwardly, thus solving the problem encountered in a conventional bottle with an ear in which the mounting position is apt to be limited to a portion near the mouth portion.

Furthermore, a mounting portion to be located at a predetermined height which is larger in diameter than that of a mouth portion and of which upper edge is formed to be edged is subjected to orientation blow molding, but the upper edge formed to be edged maintains its injection molded state and the upper edge and a ring member formed integral with a base end of the ear are fitted with each other whereby the ear is mounted positively and without being loosened, thus solving the problem encountered in a conventional bottle with an ear.

Moreover, an ear is mounted on a molded bottle later but a lower end of the ear can be firmly fixed to the body of the bottle by extremely simple means, thus solving the problem encountered in a conventional bottle with an ear in which a gripping portion thereof is opened due to the load when the bottle is inclined.

In the bottle with an ear as described above, since the mounting portion of the ear is formed to have a large diameter, the insertion of a mounting ring is not impaired by the threads in the outer periphery of the mouth portion and the support ring but when the ear side is slightly turned, the upper edge of the mounting groove formed to have an edge and the upper edge of the projecting surface internally of the mounting ring are firmly engaged with each other. Therefore, mounting is simpler than the case which replied upon engagement between threads. Even if a load is imposed on the engaging portion, the ear is not disengaged unless the mounting ring is broken.

Moreover, only the upper portion of the ear mounting portion is composed of a flange injection molded below the mouth portion and a wall portion oriented internally thereof and placed in close contact therewith, and other portions are subjected to orientation blow molding. Therefore, the ear can be formed to have a thin wall-thickness configuration as compared with the case where the whole mounting portion is subjected to injection molding. The upper portion has a strength due to the orientation of the inner wall portion, and a molding position thereof is not limited to a portion near the mouth portion.

Furthermore, since the lower end of the ear is attached to the side of the body by means of a heat-shrinkable band fitted around the body of the bottle, when the bottle is inclined, the load is not concentrated on only the upper portion of the ear by the integration of the lower end of the ear and the body. In addition, the gripping portion is not opened due to the load, and therefore, even a large bottle which is heavy because of contents can be easily handled.

The present invention will be described in detail by way of embodiments shown in the accompanying drawings.

### 4. BRIEF DESCRIPTION OF THE DRAWINGS

The drawings show embodiments of a bottle with an ear according to this invention.

Fig. 1 is a longitudinal sectional side view of an upper half portion of a bottle.

Fig. 2 is a plan view of a bottle.

Fig. 3 is a side view of a bottle.

Fig. 4 is a developed view of a mounting ring.

Fig. 5 is a side view of a bottle with an ear in which a lower end of the ear is attached to a body of the bottle.

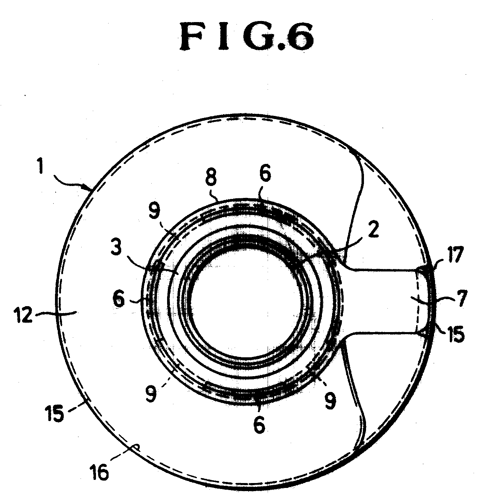

Fig. 6 is a plan view of Fig. 5.

Fig. 7 is a sectional view of essential parts of an injection mold for explaining the injection molding step of an upper edge of an ear mounting portion.

Fig. 8 is a sectional view of essential parts of a blow mold for explaining the blow molding step of an ear mounting portion and an upper edge.

### 5. MODE OF PREFERRED EMBODIMENTS

In the drawings, reference numeral 1 designates a bottle form of polyethyleneterephtalate (PETP) subjected to injection orientation blow molding. A support ring 3 is provided below a mouth portion 2.

A continuous portion to a body 11 below the support ring 3 of the bottle 1 is formed with an ear mounting portion 4 positioned at a predetermined height which is larger in diameter than the support ring 3, and a mounting groove 4a having a predetermined width is formed in the outer periphery thereof.

The lower edge of the mounting groove 4a is connected to a curve portion of a shoulder 12 which forms an upper portion of the body 11, and an upper edge 5 is formed to be edged. At four locations of the upper edge 5, there are formed inserting notches 6 at equal intervals.

Reference numeral 7 designates an ear formed of PETP, at an end of which is integrally formed a mounting ring 8. The mounting ring 8 is internally formed with four projecting surfaces 9 corresponding to the notches 6, and the upper edge of the projecting surfaces 9 is formed into a shoulder 10 which is fitted into the upper edge 5 of the mounting groove 4a.

The upper edge of the projecting surface is provided with a recess 14 which is fitted into an attachment mechanism 13 projected on the upper edge 5 of the mounting groove 4a to prevent a lateral deviation of the mounting ring 8.

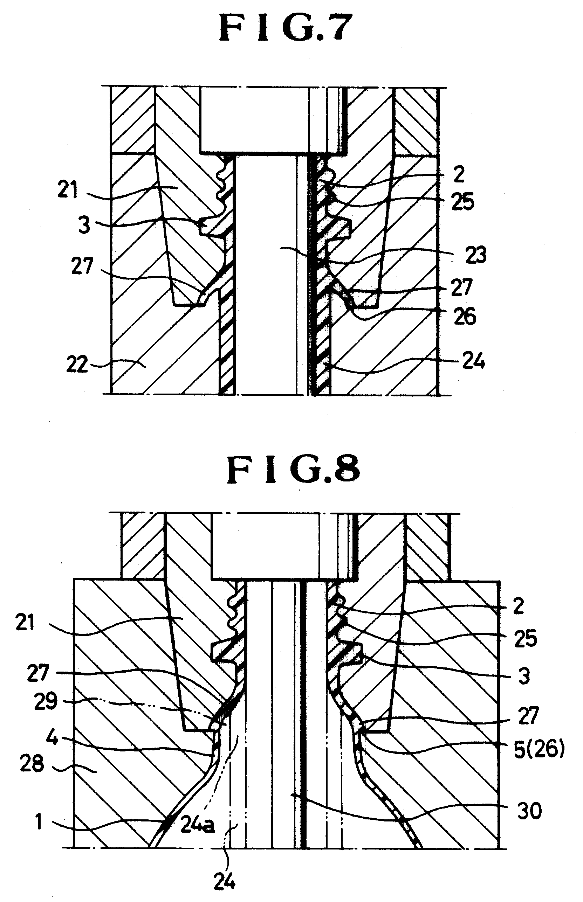

The upper edge 5 of the ear mounting portion 4 is formed from an injection molded member. Figs. 7 and 8 explain the molding steps therefor. First, when a neck mold 21, a cavity mold 22 and a core mold 23 are closed to injection mold a preform 24, a flange 27 whose lower edge 26 is acute along with threads 25 in the outer periphery of the mouth portion 2 and the support ring 3 are inwardly integrally molded below the mouth portion by making use of a parting portion between the neck mold 21 and the cavity mold 22.

After the injection molding, the preform 24 is held by the neck mold 21 above the flange 27 and transported to the blow mold 28, where the molds are closed. Thereby, the preform body below the lower edge 26 of the flange 27 is positioned at the blow cavity. Within the blow cavity, a space 29 is formed between the inside of the flange and the wall portion 24a of the preform indicated at the phantom line.

Next, when air blowing is carried out while longitudinally orienting the preform 24 by means of an orientation rod 30, the preform body is longitudinally oriented from the end of the flange 27 and also laterally expanded to form a bottle 1 having an ear mounting portion 4 having a large diameter below the flange. In this bottle 1, the preform wall portion 24a internally of the flange is extended to have a thin wall-thickness till coming into close contact with the inside of the flange by the space 29 internally of the flange 27, and a constriction thereunder constitutes a mounting groove 4a.

Thereby, the flange 27 forms an upper outer wall of the ear mounting portion 4 of the bottle 1, and the lower edge 26 forms the upper edge 5 formed to be edged so that the ear mounting portion 4 has an upper portion composed of an outer wall subjected to injection molding and an oriented inner wall, other portions being formed by thin walls by way of orientation blow molding.

While molding of notches 6 of the upper edge 5 is omitted in this step, it is to be noted that the notches 6 can be molded during molding of the flange.

In the above-described construction, the mounting ring 8 is placed over the mounting groove 4a from the mouth portion, and positioning between the notches 6 and the projecting surfaces 9 internally of the mounting ring is carried out for insertion, after which the mounting ring 8 is forcibly turned. Then the projecting surfaces 5 are positioned under the upper edges 5 and firmly fitted.

Thereby, the ear 7 is mounted on the side of the bottle. The ear 7 is not disengaged from the bottle 1 unless the bottle 1 is held and the ear 7 is forcibly deviated laterally.

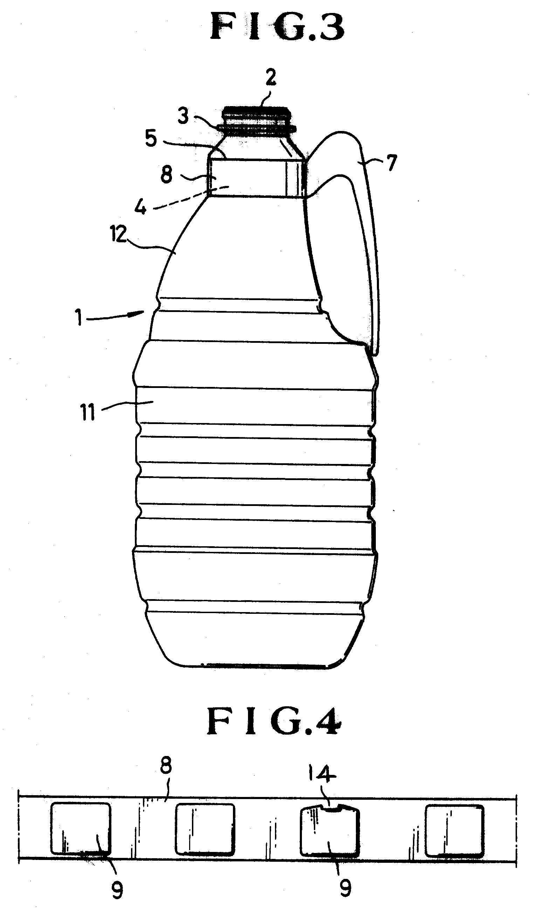

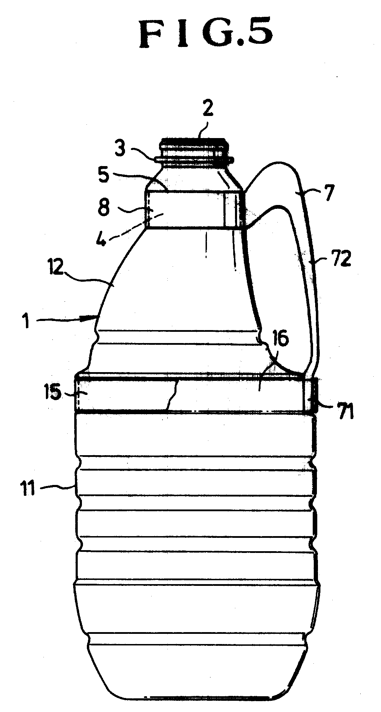

Figs. 4 and 5 show a bottle in which a lower end 71 of the ear 7 is integrally attached to the body using a heat-shrinkable band 15.

The heat-shrinkable band 15 is formed of PETP or the like. The band 15 before being shrunk has a larger in diameter than that of the body, and after the ear 7 has been mounted on the bottle 1, the band 5 is fitted from the top of the bottle into an annular groove 16 formed around the body.

A portion of the annular groove 16 at which a lower end 71 of the ear 7 is positioned is formed with a recess 17. The heat-shrinkable band 15 is internally formed with a partial gap by the presence of the recess 17. The aforesaid lower end 71 is positioned at the gap, and the lower end 71 is firmly attached to the body due to the reduction in diameter of the heat-shrinkable band 15 caused by heating.

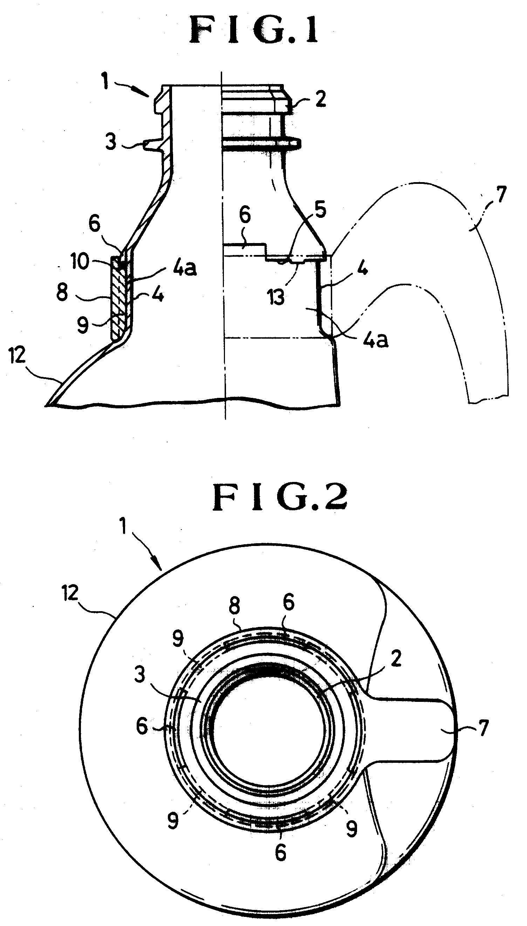

In mounting the ear 7, the mounting ring 8 is placed over the mounting groove 4, and the notches 6 and the projecting surfaces 9 internally of the mounting ring are adjusted in position and the ear 7 is inserted, after which the mounting ring 8 is forcibly turned, in a manner similar to the case shown in Fig. 1. Then, when the heat-shrinkable ring 15 is placed over the annular groove 16 and the ring 15 is heated by a conventional tunnel type heating device, the heat-shrinkable band 12 is reduced in diameter due to the shrinkage and placed in close contact with the body 11, and the lower end 71 of the ear 7 is pulled toward the body 11 due to the shrinking force and firmly attached.

In the bottle 1 as described above, the lower end 71 of the ear 7 is also attached to the body 11 by means of the heat-shrinkable band 15. Therefore, the load is not concentrated on the upper portion of the ear as so experienced in the past, and when the bottle 1 is inclined, a gripping portion 72 is not opened due to the load. Therefore, the contents are easily poured as compared with the case where an ear is merely mounted on the mouth portion, and even a heavy large bottle is easily handled.

## Claims (Claims for the following Contracting State(s): AT, BE, DK, GR, LU, NL, ES, SE, CH)

1. A bottle (1) with an ear (7) comprising a mounting ring (8), the bottle (1) comprising a mouth portion(2), a body (11) prepared by orientation blow-moulding and disposed below the mouth portion (2), a mounting portion (4) comprising a mounting groove (4a), an upper portion of the mounting groove (4a) being formed with an edge (5) having one of a notch (6) or a projecting surface, the mounting ring (8) having an inner side internally provided with the other of a notch or a projecting surface (9) corresponding to the projecting surface or notch (6), respectively, of the mounting groove (4a) for securely connecting the ear (7) to the bottle (1), characterised in that the mounting portion (4) is formed on the body (11) and has a diameter greater than that of the mouth portion (2) and in that the upper portion of the mounting groove (4a) is prepared by injection-moulding and an inner wall of the mounting groove (4a) is prepared by orientation blow-moulding.

2. A bottle (1) with an ear (7) according to Claim 1, wherein the upper portion of the mounting groove (4a) comprises a flange (27) below the mouth portion (2) and the edge (5) of the mounting groove (4a) is formed by a lower end edge (26) of the flange (27).

3. A bottle (1) with an ear (7) according to Claim 1 or 2, wherein a projecting surface (9) on one of the mounting ring (8) or edge (5) of the mounting groove (4a) is formed into a shoulder (10) with a recess (14), the recess (14) being fittable to an attachment mechanism (13) on the other of the edge (5) of the mounting groove (4a) or mounting ring (8), respectively.

4. A bottle (1) with an ear (7) according to any one of Claims 1 to 3, wherein a lower edge of the mounting groove (4a) is continuous to a curve of a shoulder (12) which forms an upper portion of the body (11).

5. A bottle (1) with an ear (7) according to any one of Claims 1 to 4, wherein, after the ear (7) has been mounted on the bottle (1), a lower end (71) of the ear (7) is attached to a side of the body (11) by a heat-shrinkable band (15) fitted around the body (11) of the bottle (1).

6. A bottle (1) with an ear (7) according to any one of Claims 1 to 5, wherein the bottle (1) and ear (7) are formed of the same resin.

7. A bottle (1) with an ear (7) according to Claim 5 or 6, wherein the heat-shrinkable band (15) and the bottle (1) are formed of the same resin.

8. A method of forming a bottle (1) with an ear according to any one of Claims 1 to 7, the bottle (1) comprising a mounting portion (4) having a mounting groove (4a), which method comprises injection moulding, to form a preform (24) and a flange (27) around the outer surface of the preform (24), and orientation blow moulding, to extend a wall portion (24a) of the preform (24) so as to come into close contact with the flange (27), to form part of the mounting groove (4a).

## Claims (Claims for the following Contracting State(s): FR, DE, IT)

1. A bottle (1) with an ear (7) comprising a mounting ring (8), the bottle (1) comprising a mouth portion(2), a body (11) prepared by orientation blow-moulding and disposed below the mouth portion (2), a mounting portion (4) comprising a mounting groove (4a), an upper portion of the mounting groove (4a) being formed with an edge (5) having one of a notch (6) or a projecting surface, the mounting ring (8) having an inner side internally provided with the other of a notch or a projecting surface (9) corresponding to the projecting surface or notch (6), respectively, of the mounting groove (4a) for securely connecting the ear (7) to the bottle (1), characterised in that the mounting portion (4) is formed on the body (11) and has a diameter greater than that of the mouth portion (2) and in that the upper portion of the mounting groove (4a) is prepared by injection-moulding and an inner wall of the mounting groove (4a) is prepared by orientation blow-moulding.

2. A bottle (1) with an ear (7) according to Claim 1, wherein the upper portion of the mounting groove (4a) comprises a flange (27) below the mouth portion (2) and the edge (5) of the mounting groove (4a) is formed by a lower end edge (26) of the flange (27).

3. A bottle (1) with an ear (7) according to Claim 1 or 2, wherein a projecting surface (9) on one of the mounting ring (8) or edge (5) of the mounting groove (4a) is formed into a shoulder (10) with a recess (14), the recess (14) being fittable to an attachment mechanism (13) on the other of the edge (5) of the mounting groove (4a) or mounting ring (8), respectively.

4. A bottle (1) with an ear (7) according to any one of Claims 1 to 3, wherein a lower edge of the mounting groove (4a) is continuous to a curve of a shoulder (12) which forms an upper portion of the body (11).

5. A bottle (1) with an ear (7) according to any one of Claims 1 to 4, wherein, after the ear (7) has been mounted on the bottle (1), a lower end (71) of the ear (7) is attached to a side of the body (11) by a heat-shrinkable band (15) fitted around the body (11) of the bottle (1).

6. A bottle (1) with an ear (7) according to any one of Claims 1 to 5, wherein the bottle (1) and ear (7) are formed of the same resin.

7. A bottle (1) with an ear (7) according to Claim 5 or 6, wherein the heat-shrinkable band (15) and the bottle (1) are formed of the same resin.

8. A method of forming a bottle (1) with an ear according to any one of Claims 1 to 7, the bottle (1) comprising a mounting portion (4) having a mounting groove (4a), which method comprises injection moulding, to form a preform (24) and a flange (27) around the outer surface of the preform (24) and orientation blow moulding, to extend a wall portion (24a) of the preform (24) so as to come into close contact with the flange (27), to form part of the mounting groove (4a), wherein one end (26) of the flange (27) is kept free to form an edge (5) around an outer surface of the bottle wall.

## Patentansprüche (Patentansprüche für folgende(n) Vertragsstaat(en): AT, BE, DK, GR, LU, NL, ES, SE, CH)

1. Eine Flasche (1) mit einem (Trag-)Ohr (7) umfassend einen Befestigungsring (8), wobei die Flasche (1) umfaßt einen Öffnungsabschnitt (2), einen Körper (11), der durch Ausrichtungsblasformen ausgebildet und unterhalb des Öffnungsabschnitts (2) angeordnet ist, einen Befestigungsabschnitt (4) umfassend eine Befestigungsnut (4a), wobei ein oberer Abschnitt der Befestigungsnut (4a) mit einer Kante (5) ausgebildet ist, die eine eine Kerbe (6) oder eine vorstehende Fläche aufweist, wobei der Befestigungsring (8) eine innere Seite aufweist, die innen mit der anderen von einer Kerbe oder einer vorstehenden Fläche (9) versehen ist, die der vorstehenden Fläche bzw. Kerbe (6) der Befestigungsnut (4a) zur sicheren/festen Verbindung des Ohrs (7) an der Flasche (1) entspricht, dadurch gekennzeichnet, daß der Befestigungsabschnitt (4) an den Körper (11) geformt ist und einen Durchmesser aufweist, der größer als jener des Öffnungsabschnitts (2) ist, und daß der obere Abschnitt der Befestigungsnut (4a) durch Spritzgießen ausgebildet bzw. erstellt ist und eine innere Wand der Befestigungsnut (4a) durch Ausrichtungsblasformen ausgebildet bzw. erstellt ist.

2. Flasche (1) mit einem Ohr (7) nach Anspruch 1, dadurch gekennzeichnet, daß der obere Abschnitt der Befestigungsnut (4a) einen Flansch (27) unterhalb des Öffnungsabschnitts (2) umfaßt und die Kante (5) der Befestigungsnut (4a) von einer unteren Stirnkante (26) des Flansches (27) gebildet ist.

3. Flasche (1) mit einem Ohr (7) nach Anspruch 1 oder 2, dadurch gekennzeichnet, daß eine vorstehende Fläche (9) an einem von dem Befestigungsring (8) oder der Kante (5) der Befestigungsnut (4a) zu einer Schulter (10) mit einer Aussparung (14) ausgebildet ist, wobei die Aussparung (14) in einen Befestigungsmechanismus (13) an der anderen von der Kante (5) der Befestigungsnut (4a) bzw. dem Befestigungsring (8) einsetzbar ist.

4. Flasche (1) mit einem Ohr (7) nach einem oder mehreren der Ansprüche 1 bis 3, dadurch gekennzeichnet, daß eine untere Kante der Befestigungsnut (4a) ununterbrochen mit einer Kurve einer Schulter (12) ausgebildet ist, die einen oberen Abschnitt des Körpers (11) bildet.

5. Flasche (1) mit einem Ohr (7) nach einem oder mehreren der Ansprüche 1 bis 4, dadurch gekennzeichnet, daß, nachdem das Ohr (7) an der Flasche (1) befestigt worden ist, ein unteres Ende (71) des Ohrs (7) an eine Seite des Körpers (11) mit einem Wärmeschrumpfband (15) befestigt wird, das um den Körper (11) der Flasche (1) gelegt wird.

6. Flasche (1) mit einem Ohr (7) nach einem oder mehreren der Ansprüche 1 bis 5, dadurch gekennzeichnet, daß die Flasche (1) und das Ohr (7) aus dem gleichen Harz geformt sind.

7. Flasche (1) mit einem Ohr (7) nach Anspruch 5 oder 6, dadurch gekennzeichnet, daß das Wärmeschrumpfband (15) und die Flasche (1) aus dem gleichen Harz geformt sind.

8. Verfahren zur Formung einer Flasche (1) mit einem (Trag)Ohr nach einem oder mehreren der Ansprüche 1 bis 7, wobei die Flasche (1) einen Befestigungsabschnitt (4) mit einer Befestigungsnut (4a) umfaßt, wobei das Verfahren umfaßt Spritzgießen zur Formung eines Vorformlings (24) und eines Flansches (27) um die äußere Seitenfläche des Vorformlings (24) sowie Ausrichtungsblasformen zur Ausweitung eines Wandabschnitts (24a) des Vorformlings (24), um in dichten Kontakt mit dem Flansch (27) zu kommen, zur Formung eines Teils der Befestigungsnut (4a).

## Patentansprüche (Patentansprüche für folgende(n) Vertragsstaat(en): FR, DE, IT)

1. Eine Flasche (1) mit einem (Trag-)Ohr (7) umfassend einen Befestigungsring (8), wobei die Flasche (1) umfaßt einen Öffnungsabschnitt (2), einen Körper (11), der durch Ausrichtungsblasformen ausgebildet und unterhalb des Öffnungsabschnitts (2) angeordnet ist, einen Befestigungsabschnitt (4) umfassend eine Befestigungsnut (4a), wobei ein oberer Abschnitt der Befestigungsnut (4a) der mit einer Kante (5) ausgebildet ist, die eine Kerbe (6) oder eine vorstehende Fläche aufweist, wobei der Befestigungsring (8) eine innere Seite aufweist, die innen mit der anderen von einer Kerbe oder einer vorstehenden Fläche (9) versehen ist, die der vorstehenden Fläche bzw. Kerbe (6) der Befestigungsnut (4a) zur sicheren/festen Verbindung des Ohrs (7) an der Flasche (1) entspricht, dadurch gekennzeichnet, daß der Befestigungsabschnitt (4) an den Körper (11) geformt ist und einen Durchmesser aufweist, der größer als jener des Öffnungsabschnitts (2) ist, und daß der obere Abschnitt der Befestigungsnut (4a) durch Spritzgießen ausgebildet bzw. erstellt ist und eine innere Wand der Befestigungsnut (4a) durch Ausrichtungsblasformen ausgebildet bzw. erstellt ist.

2. Flasche (1) mit einem Ohr (7) nach Anspruch 1, dadurch gekennzeichnet, daß der obere Abschnitt der Befestigungsnut (4a) einen Flansch (27) unterhalb des Öffnungsabschnitts (2) umfaßt und die Kante (5) der Befestigungsnut (4a) von einer unteren Stirnkante (26) des Flansches (27) gebildet ist.

3. Flasche (1) mit einem Ohr (7) nach Anspruch 1 oder 2, dadurch gekennzeichnet, daß eine vorstehende Fläche (9) an einem von dem Befestigungsring (8) oder der Kante (5) der Befestigungsnut (4a) zu einer Schulter (10) mit einer Aussparung (14) ausgebildet ist, wobei die Aussparung (14) in einen Befestigungsmechanismus (13) an dem anderen von der Kante (5) der Befestigungsnut (4a) bzw. dem Befestigungsring (8) einsetzbar ist.

4. Flasche (1) mit einem Ohr (7) nach einem oder mehreren der Ansprüche 1 bis 3, dadurch gekennzeichnet, daß eine untere Kante der Befestigungsnut (4a) ununterbrochen mit einer Kurve einer Schulter (12) ausgebildet ist, die einen oberen Abschnitt des Körpers (11) bildet.

5. Flasche (1) mit einem Ohr (7) nach einem oder mehreren der Ansprüche 1 bis 4, dadurch gekennzeichnet, daß, nachdem das Ohr (7) an der Flasche (1) befestigt worden ist, ein unteres Ende (71) des Ohrs (7) an eine Seite des Körpers (11) mit einem Wärmeschrumpfband (15) befestigt wird, das um den Körper (11) der Flasche (1) gelegt wird.

6. Flasche (1) mit einem Ohr (7) nach einem oder mehreren der Ansprüche 1 bis 5, dadurch gekennzeichnet, daß die Flasche (1) und das Ohr (7) aus dem gleichen Harz geformt sind.

7. Flasche (1) mit einem Ohr (7) nach Anspruch 5 oder 6, dadurch gekennzeichnet, daß das Wärmeschrumpfband (15) und die Flasche (1) aus dem gleichen Harz geformt sind.

8. Verfahren zur Formung einer Flasche (1) mit einem (Trag-) Ohr nach einem oder mehreren der Ansprüche 1 bis 7, wobei die Flasche (1) einen Befestigungsabschnitt (4) mit einer Befestigungsnut (4a) umfaßt, wobei das Verfahren umfaßt Spritzgießen zur Formung eines Vorformlings (24) und eines Flansches (27) um die äußere Seitenfläche des Vorformlings (24) sowie Ausrichtungsblasformen zur Ausweitung eines Wandabschnitts (24a) des Vorformlings (24), um in engen Kontakt mit dem Flansch (27) zu kommen, zur Formung eines Teils der Befestigungsnut (4a), wobei ein Ende (26) des Flansches (27) frei gehalten wird, um eine Kante (5) um eine äußere Seitenfläche der Flaschenwand zu formen.

## Revendications (Revendications pour l'(les) Etat(s) contractant(s) suivant(s): AT, BE, DK, GR, LU, NL, ES, SE, CH)

1. Bouteille (1) munie d'une poignée (7) comportant un anneau de montage (8), la bouteille (1) comportant une partie d'embouchure (2), un corps (11) préparé par moulage par soufflage avec orientation et agencé en dessous de la partie d'embouchure (2), une partie de montage (4) comportant une gorge de montage (4a), une partie supérieure de la gorge de montage (4a) étant munie d'un bord (5) ayant une première parmi une encoche (6) et une surface faisant saillie, l'anneau de montage (8) ayant un côté intérieur muni intérieurement de l'autre parmi une encoche et une surface faisant saillie (9) correspondant à la surface faisant saillie ou à l'encoche (6), respectivement, de la gorge de montage (4a) pour relier de manière sûre la poignée (7) à la bouteille (1), caractérisée en ce que la partie de montage (4) est formée sur le corps (11) et a un diamètre plus grand que celui de la partie d'embouchure (2), et en ce que la partie supérieure de la gorge de montage (4a) est préparée par moulage par injection et une paroi intérieure de la gorge de montage (4a) est préparée par moulage par soufflage avec orientation.

2. Bouteille (1) munie d'une poignée (7) selon la revendication 1, dans laquelle la partie supérieure de la gorge de montage (4a) comporte un rebord (27) en dessous de la partie d'embouchure (2) et le bord (5) de la gorge de montage (4a) est formé par un bord d'extrémité inférieure (26) du rebord (27).

3. Bouteille (1) munie d'une poignée (7) selon la revendication 1 ou 2, dans laquelle une surface faisant saillie (9) située sur un premier parmi l'anneau de montage (8) ou le bord (5) de la gorge de montage (4a) est formée en un épaulement (10) ayant une cavité (14), la cavité (14) pouvant être agencée sur un mécanisme de fixation (13) sur l'autre parmi le bord (5) de la gorge de montage (4a) ou l'anneau de montage (8), respectivement.

4. Bouteille (1) munie d'une poignée (7) selon l'une quelconque des revendications 1 à 3, dans laquelle un bord inférieur de la gorge de montage (4a) est prolongé par une courbe d'épaulement (12) qui forme une partie supérieure du corps (11).

5. Bouteille (1) munie d'une poignée (7) selon l'une quelconque des revendications 1 à 4, dans laquelle, après que la poignée (7) ait été montée sur la bouteille (1), une extrémité inférieure (71) de la poignée (7) est fixée sur un côté du corps (11) par une bande rétrécissant à la chaleur (15) agencée autour du corps (11) de la bouteille (1).

6. Bouteille (1) munie d'une poignée (7) selon l'une quelconque des revendications 1 à 5, dans laquelle la bouteille (1) et la poignée (7) sont constituées de la même résine.

7. Bouteille (1) munie d'une poignée (7) selon la revendication 5 ou 6, dans laquelle la bande rétrécissant à la chaleur (15) et la bouteille (1) sont constituées de la même résine.

8. Procédé de formation d'une bouteille (1) munie d'une poignée selon l'une quelconque des revendications 1 à 7, la bouteille (1) comportant une partie de montage (4) ayant une gorge de montage (4a), lequel procédé comporte le moulage par injection pour former une préforme (24) et un rebord (27) autour de la surface extérieure de la préforme (24), et le moulage par soufflage avec orientation, pour étendre une partie de paroi (24a) de la préforme (24) de manière à venir en contact étroit avec le rebord (27), pour former une partie de la gorge de montage (4a).

## Revendications (Revendications pour l'(les) Etat(s) contractant(s) suivant(s): FR, DE, IT)

1. Bouteille (1) munie d'une poignée (7) comportant un anneau de montage (8), la bouteille (1) comportant une partie d'embouchure (2), un corps (11) préparé par moulage par soufflage avec orientation et agencé en dessous de la partie d'embouchure (2), une partie de montage (4) comportant une gorge de montage (4a), une partie supérieure de la gorge de montage (4a) étant munie d'un bord (5) ayant une première parmi une encoche (6) et une surface faisant saillie, l'anneau de montage (8) ayant un côté intérieur muni intérieurement de l'autre parmi une encoche et une surface faisant saillie (9) correspondant à la surface faisant saillie ou à l'encoche (6), respectivement, de la gorge de montage (4a) pour relier de manière sûre la poignée (7) à la bouteille (1), caractérisée en ce que la partie de montage (4) est formée sur le corps (11) et a un diamètre plus grand que celui de la partie d'embouchure (2), et en ce que la partie supérieure de la gorge de montage (4a) est préparée par moulage par injection et une paroi intérieure de la gorge de montage (4a) est préparée par moulage par soufflage avec orientation.

2. Bouteille (1) munie d'une poignée (7) selon la revendication 1, dans laquelle la partie supérieure de la gorge de montage (4a) comporte un rebord (27) en dessous de la partie d'embouchure (2) et le bord (5) de la gorge de montage (4a) est formé par un bord d'extrémité inférieure (26) du rebord (27).

3. Bouteille (1) munie d'une poignée (7) selon la revendication 1 ou 2, dans laquelle une surface faisant saillie (9) située sur un premier parmi l'anneau de montage (8) ou le bord (5) de la gorge de montage (4a) est formée dans une épaulement (10) ayant une cavité (14), la cavité (14) pouvant être agencée sur un mécanisme de fixation (13) situé sur l'autre parmi le bord (5) de la gorge de montage (4a) ou l'anneau de montage (8), respectivement.

4. Bouteille (1) munie d'une poignée (7) selon l'une quelconque des revendications 1 à 3, dans laquelle un bord inférieur de la gorge de montage (4a) est prolongé par une courbe d'épaulement (12) oui forme une partie supérieure du corps (11).

5. Bouteille (1) munie d'une poignée (7) selon l'une quelconque des revendications 1 à 4, dans laquelle, après que la poignée (7) ait été montée sur la bouteille (1), une extrémité inférieure (71) de la poignée (7) est fixée sur un côté du corps (11) par une bande rétrécissant à la chaleur (15) agencée autour du corps (11) de la bouteille (1).

6. Bouteille (1) munie d'une poignée (7) selon l'une quelconque des revendications 1 à 5, dans laquelle la bouteille (1) et la poignée (7) sont constituées de la même résine.

7. Bouteille (1) munie d'une poignée (7) selon la revendication 5 ou 6, dans laquelle la bande rétrécissant à la chaleur (15) et la bouteille (1) sont constituées de la même résine.

8. Procédé de formation d'une bouteille (1) munie d'une poignée selon l'une quelconque des revendications 1 à 7, la bouteille (1) comportant une partie de montage (4) ayant une gorge de montage (4a), lequel procédé comporte le moulage par injection pour former une préforme (24) et un rebord (27) autour de la surface extérieure de la préforme (24), et le moulage par soufflage avec orientation, pour étendre une partie de paroi (24a) de la préforme (24) de manière à venir en contact étroit avec le rebord (27), pour former une partie de la gorge de montage (4a), dans lequel une extrémité (26) du rebord (27) est gardée libre pour former un bord (5) autour d'une surface extérieure de la paroi de bouteille.
